# EUROPEAN PATENT APPLICATION

(11) **EP 4 712 485 A1**
(43) Date of publication of application: **18.03.2026**
(21) Application number: 24803050.4
(22) Date of filing: 09.05.2024
(51) Int. Cl.: H04N 21/2187

(54) **INTERFACE INTERACTION METHOD AND APPARATUS, AND DEVICE AND STORAGE MEDIUM**

(30) Priority: 09.05.2023 CN 202310519727
(71) Applicant: Beijing Zitiao Network Technology Co., Ltd., Beijing 100190 (CN)
(72) Inventor: WANG, Yaozheng, Beijing 100028 (CN)
(74) Representative: Isarpatent
(86) International application number: PCT/CN2024/091939
(87) International publication number: WO 2024/230771

(57) **Abstract**

Embodiments of the disclosure relate to a method, an apparatus, a device, and a storage medium of interface interaction. The method proposed herein includes: displaying a live streaming interface of a live streaming room, wherein the live streaming interface includes an interaction region, and the interaction region is configured to present predetermined interaction content within the live streaming room; and adjusting a display size of the interaction region in the live streaming interface based on an interaction state of the interaction region. Based on the above way, the embodiments of the present disclosure can dynamically adjust the interaction region according to the interaction state of the interaction region, thereby improving the efficiency of content presentation in the live streaming interface.

## Description

This application claims priority to Chinese Invention Patent Application No. 202310519727. X, filed on May 09, 2023 and entitled "METHOD, APPARATUS, DEVICE, AND STORAGE MEDIUM OF INTERFACE INTERACTION", the entirety of which is incorporated herein by reference.

### FIELD

Example embodiments of the present disclosure generally relate to the field of computers, and more particularly, to a method, an apparatus, a device, and a computer-readable storage medium of interface interaction.

### BACKGROUND

With the development of computer technologies, the Internet has become an important source for people to obtain various content. The live streaming technology that propagates content through the Internet and streaming media technology is becoming increasingly prosperous, and is gradually becoming the mainstream expression mode on the Internet due to its integration of abundant elements such as images, text, sounds, and so on.

### SUMMARY

In a first aspect of the present disclosure, a method of interface interaction is provided. The method includes: displaying a live streaming interface of a live streaming room, wherein the live streaming interface includes an interaction region for presenting predetermined interaction content within the live streaming room; and adjusting a display size of the interaction region in the live streaming interface based on an interaction state of the interaction region.

In a second aspect of the present disclosure, an apparatus of interface interaction is provided. The apparatus includes: a display module configured to display a live streaming interface of a live streaming room, wherein the live streaming interface includes an interaction region for presenting predetermined interaction content within the live streaming room; and an adjustment module configured to adjust a display size of the interaction region in the live streaming interface based on an interaction state of the interaction region.

In a third aspect of the present disclosure, an electronic device is provided. The device includes at least one processing unit; and at least one memory coupled to the at least one processing unit and storing instructions for execution by the at least one processing unit. The instructions, when executed by the at least one processing unit, cause the device to perform the method of the first aspect.

In a fourth aspect of the present disclosure, a computer-readable storage medium is provided. The computer-readable storage medium has a computer program stored thereon, and the computer program is executable by a processor to implement the method of the first aspect.

It should be understood that the content described in this Summary is not intended to limit key features or important features of the embodiments of the present disclosure, nor is it intended to limit the scope of the present disclosure. Other features of the present disclosure will be readily understood from the following description.

### BRIEF DESCRIPTION OF DRAWINGS

The above and other features, advantages, and aspects of various embodiments of the present disclosure will become more apparent with reference to the following detailed description taken in conjunction with the accompanying drawings. Throughout the drawings, the same or similar reference signs denote the same or similar elements, where:
FIG. 1 illustrates a schematic diagram of an example environment in which the embodiments of the present disclosure can be implemented;
FIGS. 2A to 2C illustrate example interfaces according to some embodiments of the present disclosure;
FIGS. 3A and 3B illustrate example interfaces according to some other embodiments of the present disclosure;
FIGS. 4A and 4B illustrate a flowchart of an example process of interface interaction according to some embodiments of the present disclosure;
FIG. 5 illustrates a schematic structural block diagram of an apparatus of interface interaction according to some embodiments of the present disclosure; and
FIG. 6 illustrates a block diagram of an electronic device capable of implementing various embodiments of the present disclosure.

### DETAILED DESCRIPTION

Embodiments of the present disclosure will be described in more detail below with reference to the accompanying drawings. Although certain embodiments of the present disclosure are shown in the drawings, it should be understood that the present disclosure may be implemented in various forms, and should not be construed as being limited to the embodiments set forth herein, but rather, these embodiments are provided for a more thorough and complete understanding of the present disclosure. It should be understood that the drawings and embodiments of the present disclosure are for illustrative purposes only and are not intended to limit the scope of the present disclosure.

It should be noted that the heading of any section/subsection provided in this article is not limiting. Various embodiments are described throughout herein, and any type of embodiments may be included in any section/subsection. Furthermore, the embodiments described in any section/subsection may be combined in any way with any other embodiments in the same section/subsection and/or any other embodiment described in different sections/subsections.

In the description of the embodiments of the present disclosure, the terms "including" and similar expressions should be understood as an open-ended inclusion, this is, "including but not limited to". The term "based on" should be understood as "based at least in part on". The terms "one embodiment" or "the embodiment" should be understood as "at least one embodiment". The term "some embodiments" should be understood as "at least some embodiments". Other explicit and implicit definitions may also be included below. The terms "first," "second," etc. refer to different or the same object. Other explicit and implicit definitions may also be included below.

Embodiments of the present disclosure may relate to data of a user, acquisition and/or use of data, etc. These aspects all comply with corresponding laws, regulations and relevant regulations. In the embodiments of the present disclosure, collection, obtaining, processing, processing, forwarding, use, etc. of all data, are performed with the user's knowledge and confirmation. Accordingly, when implementing each embodiment of the present disclosure, users should be informed of the type, scope of use, usage scenarios, etc. that may be involved in the data or information and obtain their authorization through appropriate means in accordance with relevant laws and regulations. The specific notification and/or authorization methods may vary according to actual situations and application scenarios, and the scope of the present disclosure is not limited in this respect.

In the solutions in the present specification and the embodiments, if the processing of personal information is involved, the processing will be carried out on the premise of that is a basis of legality (e.g., consent of the subject of the personal information is obtained, or it is necessary to fulfill a contract, etc.), and the processing will be carried out within the scope of the stipulations or agreements. The user refusing to process personal information other than that which is necessary for the basic functions will not affect the user's use of the basic functions.

In a live streaming scenario, both a host (also referred to as a streamer of a live streaming room) and the audience (also referred to as a viewer of the live streaming room) may access the live streaming room through their terminal devices to acquire live streaming content or to interact with it. In such a live streaming scenario, different users may have different requirements for content acquisition. For example, some users may prefer to participate in the interaction, while some users may desire to more focus on the live streaming content. This makes the traditional live streaming interface design difficult to meet the content acquisition requirements of different users.

Embodiments of the present disclosure provide a solution of interface interaction. According to the solution, a live streaming interface of a live streaming room may be displayed, where the live streaming interface includes an interaction region for presenting predetermined interaction content within the live streaming room. Further, a display size of the interaction region in the live streaming interface is adjusted based on an interaction state of the interaction region. For example, such an interaction state may indicate whether the interaction region has been interacted with during a predetermined time period, or whether a preset interaction associated with the interaction region is detected.

In this way, the embodiments of the present disclosure can dynamically adjust the interaction region based on user interaction with the interaction region, thereby enabling more efficient display of the interaction content in the live streaming interface.

Various example implementations of this solution are described in detail below with reference to the accompanying drawings.

### Example Environment

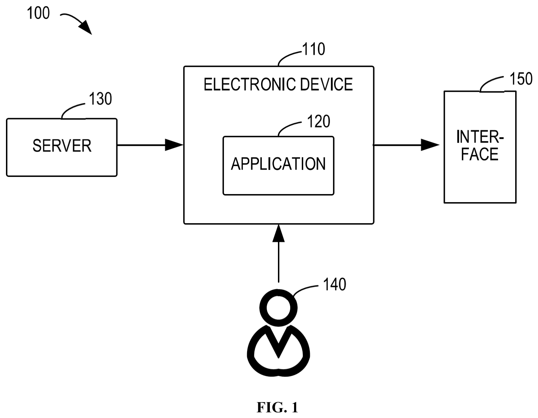

FIG. 1 illustrates a schematic diagram of an example environment 100 in which embodiments of the present disclosure can be implemented. As shown in FIG. 1, the example environment 100 may include an electronic device 110.

In this example environment 100, the electronic device 110 may run an application 120 for providing and viewing the live streaming. The application 120 may be any suitable type of application for providing and viewing the live streaming, and examples of which may include, but are not limited to: online video applications, live streaming applications and so on. The user 140 may interact with the application 120 via the electronic device 110 and/or attached device thereof. The user 140 may be, for example, the user that provides live streaming content (also referred to as a host), or the user that views the live streaming (also referred to as an audience).

In the environment 100 of FIG. 1, in a case that the application 120 is active, the electronic device 110 may present a live streaming interface 150 through the application 120.

In some embodiments, the electronic device 110 communicates with the server 130 to enable provision of services to the application 120. The electronic device 110 may be any type of mobile terminal, fixed terminal, or portable terminal, including a mobile phone, a desktop computer, a laptop computer, a notebook computer, a netbook computer, a tablet computer, a media computer, a multimedia tablet, a palmtop computer, a portable game console, a VR (virtual reality)/AR (augmented reality) device, a Personal Communication System (PCS) device, a personal navigation device, a Personal Digital Assistant (PDA), an audio/video player, a digital camera/video camera, a positioning device, a television receiver, a radio broadcast receiver, an e-book device, a gaming device, or any combination of the foregoing, including accessories and peripherals of these devices, or any combination thereof. In some embodiments, the electronic device 110 can also support any type of interface for a user (such as a "wearable" circuit, etc.).

The server 130 may be a standalone physical server, or may be a server cluster or a distributed system that consists of a plurality of physical servers, or may be a cloud server that provides basic cloud computing services such as cloud services, cloud databases, cloud computing, cloud functions, cloud storage, network services, cloud communications, middleware services, domain name services, security services, content distribution networks, big data and artificial intelligence platforms, and so on. The server 130 may include, for example, a computing system/server, such as a mainframe, an edge computing node, a computing device in a cloud environment, and the like. The server 130 may provide background services for the application 120 in the electronic device 110 that supports virtual scenes.

A communication connection may be established between the server 130 and the electronic device 110. The communication connection may be established via a wired or wireless manner. The communication connection may include, but is not limited to, a Bluetooth connection, a mobile network connection, a Universal Serial Bus (USB) connection, a Wireless Fidelity (Wi-Fi) connection, and so on. The embodiments of the present disclosure are not limited in this aspect. In the embodiments of the present disclosure, the server 130 and the electronic device 110 may implement signaling interaction through a communication connection in between.

It should be understood that the structures and functions of various elements in the environment 100 are described for illustrative purposes only and do not imply any limitation to the scope of the present disclosure.

Some example embodiments of the present disclosure will continue to be described below with reference to the accompanying drawings.

### Example Interface

The example live streaming interface according to the embodiments of the present disclosure will be described below in the perspective of a viewer and a streamer of a live streaming room, respectively.

### Viewer

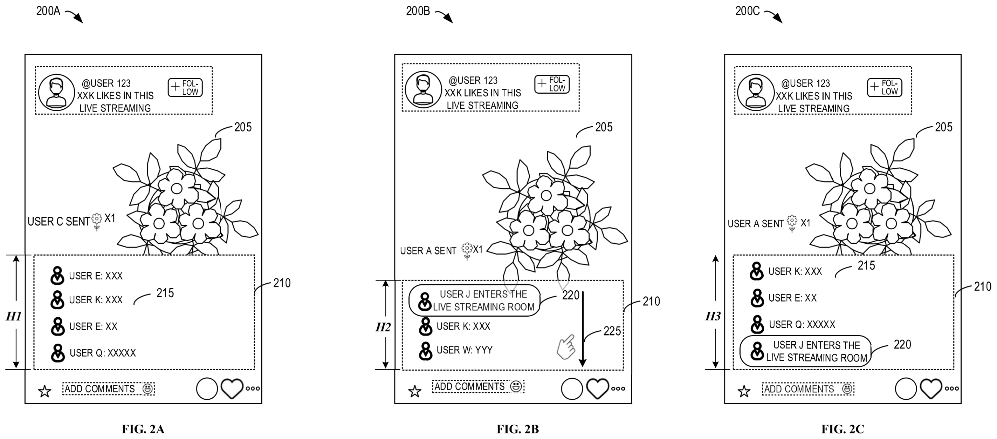

FIGS. 2A to 2C illustrate example live streaming interfaces of a viewer according to some embodiments of the present disclosure. Such a live streaming interface may be, for example, provided by the electronic device 110 corresponding to the viewer of the live streaming room, as shown in FIG. 1.

As shown in FIG. 2A, after receiving an access request for accessing the live streaming room from the viewer, the electronic device 110 may, for example, present a live streaming interface 200A as shown in FIG. 2A.

The live streaming interface 200A may include a live streaming content region 205 for presenting live streaming content. Such a live streaming content region 205 may be configured to play live streaming content of the live streaming room. Such live streaming content may include video content, picture content, audio content, text content, and the like.

As shown in FIG. 2A, the live streaming interface 200A may further include, for example, an interaction region 210. Such an interaction region 210 may be configured to present predetermined interaction content 215 (or an interaction event) within the live streaming room. Taking FIG. 2A as an example, such an interaction region 210, for example, presents at least comment content within the live streaming room, and such an interaction region 210 may also be referred to as a comment region.

Additionally, in some scenarios, such an interaction region 210 may further present other types of interaction content. For example, the interaction region 210 may further present a prompt regarding a particular user entering the live streaming room. Alternatively, or additionally, the interaction region 210 may also be configured to present a virtual gift event or the like in the live streaming room.

In the interaction region 210, a plurality of pieces of interaction content may be sequentially displayed in chronological order, which enables the latest interaction content to be dynamically presented in the interaction region 210, and enables earlier interaction content to cease to be presented in the interaction region 210. This enables users of the live streaming room to focus on the latest interaction content within the live streaming room.

In some embodiments, as shown in FIG. 2A, when the viewer just enters the live streaming room, the interaction region 210 within the live streaming interface may have, for example, a preset display size. For example, as shown in FIG. 2A, a height of the interaction region 210 may be "H1".

In some embodiments, the electronic device 110 may adjust the interaction region 210 according to an interaction state of the interaction region 210 within a predetermined time period. Such an interaction state may, for example, indicate whether the interaction region 210 is interacted with, or whether a predetermined interaction associated with the interaction region 210 has occurred or has been detected.

In one example, in a case where no operation associated with the interaction region 210 is received within a predetermined time period, the electronic device 110 may display an interface 200B as shown in FIG. 2B. Compared with the interface 200A, the electronic device 110 may adjust a degree to which the interaction region 210 obstructs the live streaming content region 205. By way of example, the electronic device 110 may reduce the display size of the interaction region 210 in the interface 200B, so that more screen region can be left to the live streaming content region 205, thereby improving the user's experience of viewing the live streaming.

Taking FIG. 2B as an example, for example, the electronic device 110 may reduce the display height of the interaction region 210 from "H1" to "H2", thereby reducing the obstruction on the live streaming content region 205. It should be understood that the electronic device 110 may also reduce the display size of the interaction region by using other appropriate ways, for example, reducing the width, reducing both the height and the width, and the like.

In still other embodiments, the electronic device 110 may adjust the display style of the predetermined content in the interaction region 210 and/or the display style of the interaction content 220 to adjust the degree to which the interaction region 210 obstructs the live streaming content region, to reduce the highlighting degree of the interaction content 220 in the live streaming interface.

For example, compared to FIG. 2A, the electronic device 110 may reduce the background transparency of the interaction region 210, so that the live streaming content region 205 can be more clearly presented. For example, the electronic device 110 may make a background mask of the interaction region 210 more transparent so as to more clearly show the live streaming content region 205.

As another example, the electronic device 110 may further change color, transparency, and the like of the interaction content 220 so as to reduce obstruction on the live streaming content region 205. For example, the electronic device 110 may cause the interaction content 220 to become translucent to improve visibility of the live streaming content region 205.

In some embodiments, the electronic device 110 may adjust the interaction region based on a preset interaction associated with the interaction region 210. For example, the electronic device 110 may further receive an operation associated with the interaction region 210. For example, the electronic device 110 may detect a swipe operation 225 occurring within the interaction region 210.

Accordingly, the electronic device 110 may present an interface 200C as shown in FIG. 2C. As shown in FIG. 2C, compared with the interface 200B, the electronic device 110 may adjust the degree to which the interaction region 210 obstructs the live streaming content region 205. For example, the electronic device 110 may increase the display size of the interaction region 210.

For example, taking FIG. 2C as an example, the electronic device 110 may increase the display height of the interaction region 210 from "H2" to "H3", thereby enabling more interaction content to be displayed for the user. It should be understood that the electronic device 110 may also increase the display size of the interaction region by using other appropriate ways, for example, increasing the width, increasing both the height and the width, and the like.

In some embodiments, the operation associated with the interaction region 210 may include any suitable operation involving the interaction region 210. For example, such operations may include, but are not limited to, a swipe operation that starts within the interaction region 210, a swipe operation that ends within the interaction region 210, a click operation within the interaction region 210, a double click operation, a hover operation (or hovering for a predetermined time), a speech interaction operation for the interaction region 210 (e.g., a speech instruction for viewing historical interaction content), or other suitable operation or a combination of operations, and/or the like.

In some embodiments, such associated operations may include an operation for viewing historical interaction content within the interaction region 210. Taking FIG. 2B as an example, such operations may include a swipe operation (e.g., swipe downward) that occurs within the interaction region in a predetermined direction.

Taking FIG. 2C as an example, for example, the electronic device 110 may display at least one piece of historical interaction content 215 within the interaction region 210 of the interface 200C. In contrast, if there is no historical interaction content that has not been displayed, the electronic device 110 may not increase the size of the interaction region 210, for example.

Additionally, in the case where there is the historical interaction content, the electronic device 110 may further determine an increase range of the size of the interaction region 210 based on the number of pieces of the historical interaction content that has not been displayed.

For example, the interaction region 210 may present three lines of comment content at height "H2". If there are at least two lines of the historical interaction content that has not been presented, the electronic device 110 may, for example, adjust the interaction region 210 to a height of "H3" to present five lines of comment content. Alternatively, if there is only one line of the historical interaction content that has not been presented, the electronic device 110 may, for example, adjust the interaction region 210 to a height of "H3" to present four lines of comment content.

In still other embodiments, the electronic device 110 may change a display style of the predetermined content in the interaction region 210 and/or the display style of the interaction content 220 to adjust the degree to which the interaction region 210 obstructs the live streaming content region, thereby highlighting the interaction content 220.

For example, compared to FIG. 2B, the electronic device 110 may increase the background transparency of the interaction region 210, so that the interaction content within the interaction region 210 can be presented more clearly. For example, the electronic device 110 may reduce the transparency of the background mask of the interaction region 210 to more clearly display the interaction content.

As another example, the electronic device 110 may further change color, transparency, and the like of the interaction content 220 to improve visibility of the interaction content 220. For example, the electronic device 110 may cause the interaction content 220 to change from the translucent state shown in FIG. 2B to an opaque state so as to improve visibility of the interaction content 220.

By this way, the embodiments of the present disclosure enable dynamical adjustment of the interaction region according to the interaction state of the interaction region, so that the interaction content can be provided to the user as needed, thereby improving the content presentation efficiency.

In some embodiments, in the state of FIG. 2C, if no operation associated with the interaction region has been detected within a predetermined time period, the electronic device 110 may further reduce a size of the interaction region 210. For example, the electronic device 110 may restore the interaction region 210 to the state shown in FIG. 2B, so as to facilitate the user to obtain the live streaming content.

As an example, after the user enters the live streaming room, the corresponding live streaming interface thereof may be, for example, as shown in FIG. 2A. That is, the interaction region may have an initial size (for example, corresponding to the height H1). Accordingly, in a case that the interaction region is not interacted with within the first time period, the interaction region may, for example, be reduced from the initial size to a size as shown in FIG. 2B (for example, corresponding to the height H2).

Further, in a case where a preset operation associated with the interaction region is detected, the size of the interaction region may be further increased (for example, corresponding to the height H3). In this state, in a case that the interaction region is not interacted with within the second time period, the size of the interaction region may be reduced, for example, restored to the state shown in FIG. 2B (for example, corresponding to the height H2).

In addition, it should be understood that the process of FIG. 2A to FIG. 2B described above may be optional, and for the live streaming interface of the viewer, the electronic device 110 may also perform adjustment relative to the initial size of the interaction region, without having to perform the process of reducing the interaction region as shown in FIG. 2A to FIG. 2B.

### Streamer

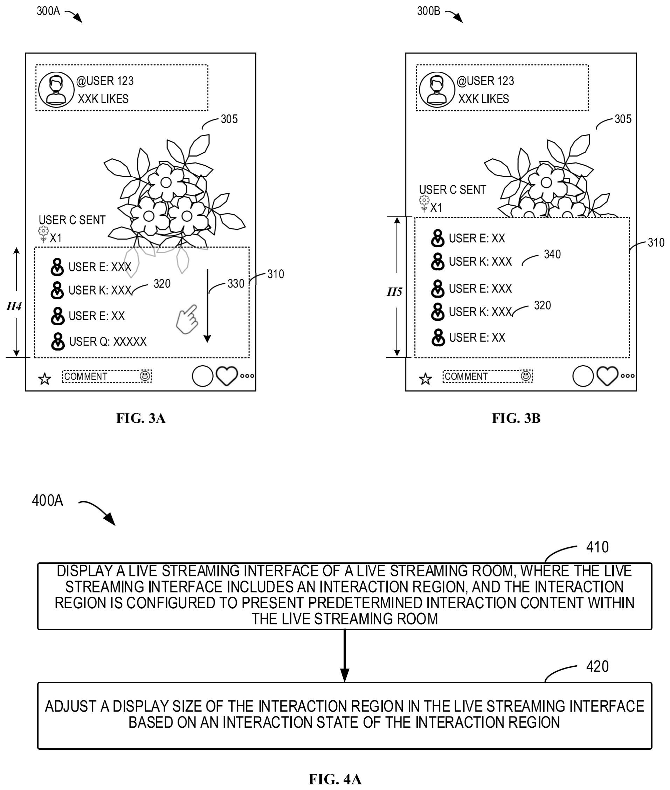

FIGS. 3A and 3B illustrate an example live streaming interface of a streamer according to some embodiments of the present disclosure. Such a live streaming interface may be, for example, provided by the electronic device 110 as shown in FIG. 1 that corresponds to the streamer of the live streaming room.

As shown in FIG. 3A, when receiving an access request from a streamer for accessing the live streaming room, the electronic device 110 may present a live streaming interface 300A as shown in FIG. 3A. As shown in FIG. 3A, the live streaming interface 300A may include a live streaming content region 305 for presenting live streaming content. Such a live streaming content region 305 may be configured to play live streaming content of a live streaming room. Such live streaming content may include video content, picture content, audio content, text content, and the like.

As shown in FIG. 3A, the live streaming interface 300A may further include, for example, an interaction region 310. Such an interaction region 310 may be configured to present predetermined interaction content 320 (or an interaction event) within the live streaming room. Taking FIG. 3A as an example, such an interaction region 310, for example, presents at least comment content within the live streaming room, and such an interaction region 310 may also be referred to as a comment region.

Additionally, in some scenarios, such interaction regions 310 may further present other types of interaction content, for example. For example, the interaction region 310 may further present a prompt regarding a particular user entering the live streaming room. Alternatively, or additionally, the interaction region 310 may also be configured to present a virtual gift event or the like in the live streaming room.

In the interaction region 310, a plurality of pieces of interaction content may be sequentially displayed in chronological order, which enables the latest interaction content to be dynamically presented in the interaction region 310, and enables earlier interaction content to cease to be presented in the interaction region 310. This enables users of the live streaming room to focus on the latest interaction content within the live streaming room.

In some embodiments, as shown in FIG. 3A, when the viewer just enters the live streaming room, the interaction region 310 within the live streaming interface may have, for example, a preset display size. For example, as shown in FIG. 3A, a height of the interaction region 310 may be "H4".

In some embodiments, the electronic device 110 may adjust the interaction region based on a preset interaction associated with the interaction region 310. For example, the electronic device 110 may further receive an operation associated with the interaction region 310. For example, the electronic device 110 may detect a swipe operation 330 occurring within the interaction region 310.

Accordingly, the electronic device 110 may present an interface 300B as shown in FIG. 3B. As shown in FIG. 3B, compared with the interface 300A, the electronic device 110 may adjust the degree to which the interaction region 310 obstructs the live streaming content region 205. For example, the electronic device 110 may increase the display size of the interaction region 310.

For example, taking FIG. 3B as an example, for example, the electronic device 110 may increase the display height of the interaction region 310 from "H4" to "H5", thereby enabling more interaction content to be displayed for the user. It should be understood that the electronic device 110 may also increase the display size of the interaction region by using other appropriate ways, for example, increasing the width, increasing both the height and the width, and the like.

In some embodiments, the operations associated with the interaction region 310 may include any suitable operations involving the interaction region 310. For example, such operations may include, but are not limited to, a swipe operation that starts within the interaction region 310, a sliding operation ending within the interaction region 310, a click operation within the interaction region 310, a double click operation, a hover operation (or hovering for a predetermined time), a speech interaction operation for the interaction region 310 (e.g., a speech instruction for viewing historical interaction content), or other suitable operation or a combination of operations, and/or the like.

In some embodiments, such associated operations may include operations for viewing historical interaction content within the interaction region 310. Taking FIG. 3A as an example, such operations may include a swipe operation (e.g., swipe downward) that occurs within the interaction region in a predetermined direction.

Taking FIG. 3B as an example, for example, the electronic device 110 may display at least one piece of historical interaction content 340 within the interaction region 310 of the interface 300B. In contrast, if there is no historical interaction content that has not been displayed, the electronic device 110 may not increase the size of the interaction region 310, for example.

Additionally, in the case where there is the historical interaction content, the electronic device 110 may further determine an increase range of the size of the interaction region 310 based on the number of pieces of the historical interaction content that has not been displayed.

For example, the interaction region 310 may present three lines of comment content at height "H4". If there are at least two lines of the historical interaction content that has not been presented, the electronic device 110 may, for example, adjust the interaction region 310 to a height of "H5" to present five lines of comment content. Alternatively, if there is only one line of the historical interaction content that has not been presented, the electronic device 110 may, for example, adjust the interaction region 310 to a height of "H5" to present four lines of comment content.

In still other embodiments, the electronic device 110 may change a display style of the predetermined content in the interaction region 310 and/or the display style of the interaction content 330 to adjust the degree to which the interaction region 310 obstructs the live streaming content region 205, thereby highlighting the interaction content 330.

For example, compared to FIG. 3A, the electronic device 110 may increase the background transparency of the interaction region 310, so that the interaction content within the interaction region 310 can be presented more clearly. For example, the electronic device 110 may reduce the transparency of the background mask of the interaction region 310 to more clearly display the interaction content.

As another example, the electronic device 110 may further change color, transparency, and the like of the interaction content 330 to improve visibility of the interaction content 330. For example, the electronic device 110 may cause the interaction content 330 to change from the translucent state shown in FIG. 3A to an opaque state so as to improve visibility of the interaction content 330.

By this way, the embodiments of the present disclosure enable dynamical adjustment of the interaction region according to the interaction of the user, so as to facilitate the streamer to interact with the user of the live streaming room.

In some embodiments, in the state of FIG. 3B, if no operation associated with the interaction region has been detected within a predetermined time period, the electronic device 110 may further reduce a size of the interaction region 310. For example, the electronic device 110 may restore the interaction region 310 to the state shown in FIG. 3A, so as to facilitate the user to obtain the live streaming content.

### Example Processes

FIG. 4A illustrates a flowchart of an example process 400A of interface interaction according to some embodiments of the present disclosure. Process 400A may be implemented at electronic device 110. Process 400A is described below with reference to FIG. 1.

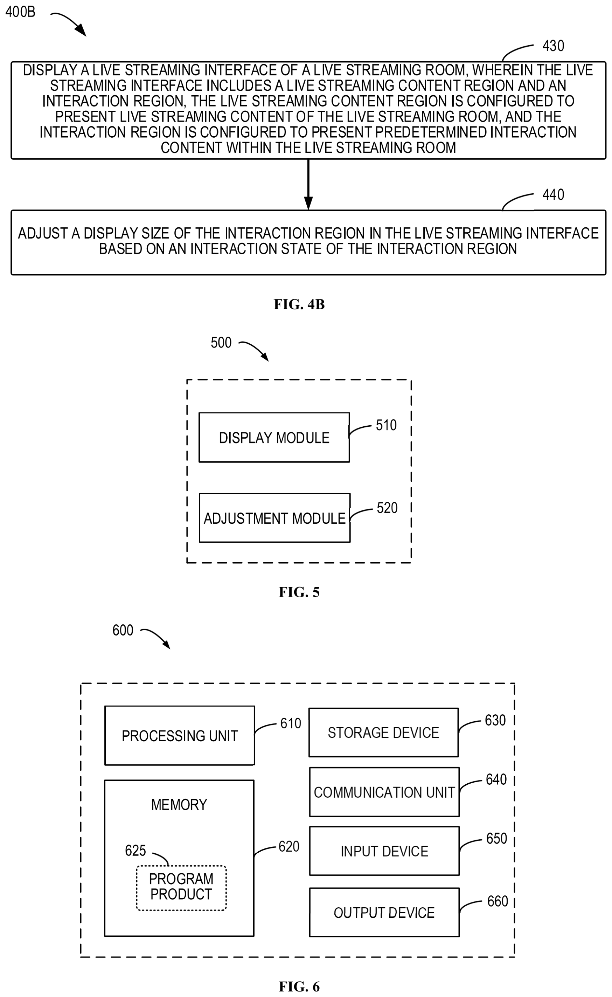

As shown in FIG. 4, at block 410, the electronic device 110 displays a live streaming interface of a live streaming room, wherein the live streaming interface includes an interaction region, and the interaction region is configured to present predetermined interaction content in the live streaming room.

At block 420, the electronic device 110 adjusts the display size of the interaction region in the live streaming interface based on the interaction state of the interaction region.

In some embodiments, adjusting the display size of the interaction region in the live streaming interface based on the interaction state of the interaction region includes: adjusting, in response to receiving a first preset operation associated with the interaction region, the display size of the interaction region in the live streaming interface to increase from a first size to a second size.

In some embodiments, the live streaming interface includes a first live streaming interface corresponding to a streamer within the live streaming room, and displaying the live streaming interface of the live streaming room includes: displaying, in response to a first access request for the live streaming room, the first live streaming interface of the live streaming room, the first live streaming interface having the interaction region of the first size.

In some embodiments, the first preset operation is configured to trigger a presentation of at least one piece of historical interaction content within the interaction region, and adjusting the display size of the interaction region in the live streaming interface based on the interaction state of the interaction region includes: increasing, in response to the live streaming room including at least one piece of historical interaction content not presented within the interaction region, the interaction region from the first size to the second size for presenting the at least one piece of historical interaction content.

In some embodiments, the first preset operation includes a sliding operation occurring within the interaction region in a predetermined direction.

In some embodiments, adjusting the display size of the interaction region in the live streaming interface based on the interaction state of the interaction region includes: reducing, in response to not receiving a second preset operation associated with the interaction region within a first time period of time, the interaction region from the third size to the fourth size.

In some embodiments, the live streaming interface includes a second live streaming interface corresponding to a viewer within the live streaming room, and displaying the live streaming interface of the live streaming room includes: displaying, in response to a second access request for the live streaming room, the second live streaming interface of the live streaming room, the second live streaming interface includes the interaction region of a third size.

In some embodiments, the method 400A further includes: adjusting a first display style of the interaction region and/or a second display style of the predetermined interaction content within the interaction region to adjust a highlighting degree of the predetermined interaction content.

In some embodiments, adjusting the first display style of the interaction region includes: adjusting a background transparency of the interaction region.

In some embodiments, adjusting the display size of the interaction region in the live streaming interface includes: adjusting a display height of the interaction region in the live streaming interface.

In some embodiments, the interaction region includes a comment region of the live streaming room, and the predetermined interaction content includes comment content within the live streaming room.

FIG. 4B illustrates a flowchart of an example process 400B of interface interaction according to some embodiments of the present disclosure. Process 400B may be implemented at electronic device 110. Process 400B is described below with reference to FIG. 1.

As shown in FIG. 4B, at block 430, the electronic device 110 displays a live streaming interface of a live streaming room, wherein the live streaming interface includes a live streaming content region and an interaction region, the live streaming content region is configured to present live streaming content of the live streaming room, and the interaction region is configured to present predetermined interaction content within the live streaming room.

At block 440, the electronic device 110 adjusts, based on the interaction state of the interaction region, a degree to which the interaction region obstructs the live streaming content region.

### Example Apparatus and Apparatus

Embodiments of the present disclosure also provide a corresponding apparatus for implementing the above method or process. FIG. 5 illustrates a schematic structural block diagram of an apparatus 500 of interface interaction according to some embodiments of the present disclosure. The apparatus 500 may be implemented or included in the electronic device 110. The various modules/components in the apparatus 500 may be implemented by hardware, software, firmware, or any combination thereof.

The apparatus 500 includes a display module 510, configured to display a live streaming interface of a live streaming room, wherein the live streaming interface includes an interaction region, and the interaction region is configured to present predetermined interaction content in the live streaming room; and an adjusting module 520, configured to adjust a display size of the interaction region in the live streaming interface based on the interaction state of the interaction region.

In some embodiments, the adjusting module 520 is further configured to adjust, in response to receiving a first preset operation associated with the interaction region, the display size of the interaction region in the live streaming interface to increase from the first size to the second size.

In some embodiments, the live streaming interface includes a first live streaming interface corresponding to a streamer in the live streaming room, and the display module 510 is further configured to display, in response to a first access request for the live streaming room, the first live streaming interface of the live streaming room, the first live streaming interface having the interaction region of the first size.

In some embodiments, the first preset operation is configured to trigger a presentation of at least one piece of historical interaction content within the interaction region, and the adjusting module 520 is further configured to increase, in response to the live streaming room including at least one piece of historical interaction content not presented within the interaction region, the interaction region from the first size to the second size for presenting the at least one piece of historical interaction content.

In some embodiments, the first preset operation includes a sliding operation occurring within the interaction region in a predetermined direction.

In some embodiments, the adjustment module 520 is further configured to reduce, in response to not receiving a second preset operation associated with the interaction region within a first time period of time, the interaction region from a third size to a fourth size.

In some embodiments, the live streaming interface includes a second live streaming interface corresponding to a viewer within the live streaming room, and the display module 510 is further configured to display, in response to a second access request for the live streaming room, the second live streaming interface of the live streaming room, the second live streaming interface including an interaction region of a third size.

In some embodiments, the adjusting module 520 is further configured to adjust the first display style of the interaction region and/or a second display style of the predetermined interaction content within the interaction region to adjust a highlighting degree of the predetermined interaction content.

In some embodiments, the adjustment module 520 is further configured to adjust a background transparency of the interaction region.

In some embodiments, the adjustment module 520 is further configured to adjust a display height of the interaction region in the live streaming interface.

In some embodiments, the interaction region includes a comment region of the live streaming room, and the predetermined interaction content includes comment content within the live streaming room.

In some embodiments, the display module 510 may be configured to display a live streaming interface of a live streaming room, where the live streaming interface includes a live streaming content region and an interaction region, the live streaming content region is configured to present live streaming content of the live streaming room, and the interaction region is configured to present predetermined interaction content within the live streaming room. The adjustment module 520 may be configured to adjust, based on the interaction state of the interaction region, a degree to which the interaction region obstructs the live streaming content region.

FIG. 6 illustrates a block diagram of an electronic device 600 in which one or more embodiments of the present disclosure may be implemented. It should be appreciated that the electronic device 600 illustrated in FIG. 6 is merely illustrative and should not constitute any limitation on the functionality and scope of the embodiments described herein. The electronic device 600 shown in FIG. 6 may be configured to implement the electronic device 110 in FIG. 1.

As shown in FIG. 6, the electronic device 600 is in the form of a general-purpose electronic device. Components of the electronic device 600 may include, but are not limited to, one or more processors or processing units 610, a memory 620, a storage device 630, one or more communication units 640, one or more input devices 650, and one or more output devices 660. The processing unit 610 may be an actual or virtual processor and capable of performing various processes according to programs stored in the memory 620. In multiprocessor systems, multiple processing units execute computer-executable instructions in parallel to improve parallel processing capabilities of electronic device 600.

Electronic device 600 typically includes a plurality of computer storage media. Such media may be any available media accessible to the electronic device 600, including, but not limited to, volatile and non-volatile media, removable and non-removable media. The memory 620 may be a volatile memory (e.g., a register, a cache, a random access memory (RAM)), a non-volatile memory (e.g., a read-only memory (ROM), an electrically erasable programmable read-only memory (EEPROM), a flash memory), or some combination thereof. Storage device 630 may be a removable or non-removable medium and may include a machine-readable medium, such as a flash drive, a magnetic disk, or any other medium, which may be used to store information and/or data (e.g., training data for training) and may be accessed within electronic device 600.

The electronic device 600 may further include additional removable/non-removable, volatile/non-volatile storage media. Although not shown in FIG. 6, a disk drive for reading or writing from a removable, nonvolatile magnetic disk (e.g., a "floppy disk") and an optical disk drive for reading or writing from a removable, nonvolatile optical disk may be provided. In these cases, each drive may be connected to a bus (not shown) by one or more data media interfaces. The memory 620 may include a computer program product 625 having one or more program modules configured to perform various methods or actions of various embodiments of the present disclosure.

The communication unit 640 is configured to communicate with another electronic device over a communication medium. Additionally, the functionality of components of the electronic device 600 may be implemented in a single computing cluster or a plurality of computing machines capable of communicating over a communication connection. Thus, the electronic device 500 may operate in a networked environment using logical connections with one or more other servers, network personal computers (PCs), or another network node.

The input device 650 may be one or more input devices such as a mouse, a keyboard, a trackball, or the like. The output device 660 may be one or more output devices, such as a display, a speaker, a printer, or the like. The electronic device 600 may also communicate with one or more external devices (not shown) through the communication unit 640 as needed, external devices such as storage devices, display devices, etc. , communicate with one or more devices that enable a user to interact with the electronic device 600, or communicate with any device (e.g., a network card, a modem, etc. ) that enables the electronic device 600 to communicate with one or more other electronic devices. Such communication may be performed via an input/output (I/O) interface (not shown).

According to example implementations of the present disclosure, there is provided a computer-readable storage medium having computer-executable instructions stored thereon, wherein the computer-executable instructions are executed by a processor to implement the method described above. According to example implementations of the present disclosure, a computer program product is further provided, the computer program product being tangibly stored on a non-transitory computer-readable medium and including computer-executable instructions, the computer-executable instructions being executed by a processor to implement the method described above.

Aspects of the present disclosure are described herein with reference to flowcharts and/or block diagrams of methods, apparatuses, devices, and computer program products implemented in accordance with the present disclosure. It should be understood that each block of the flowchart and/or block diagram, and combinations of blocks in the flowcharts and/or block diagrams, may be implemented by computer readable program instructions.

These computer-readable program instructions may be provided to a processing unit of a general purpose computer, special purpose computer, or other programmable data processing apparatus to produce a machine, such that the instructions, when executed by a processing unit of a computer or other programmable data processing apparatus, produce means to implement the functions/acts specified in the flowchart and/or block diagram. These computer-readable program instructions may also be stored in a computer-readable storage medium that cause the computer, programmable data processing apparatus, and/or other devices to function in a particular manner, such that the computer-readable medium storing instructions includes an article of manufacture including instructions to implement aspects of the functions/actions specified in one or more blocks of the flowchart and/or block diagram (s).

The computer-readable program instructions may be loaded onto a computer, other programmable data processing apparatus, or other apparatus, causing a series of operational steps to be performed on a computer, other programmable data processing apparatus, or other apparatus to produce a computer-implemented process such that the instructions, when executed on a computer, other programmable data processing apparatus, or other devices implement the functions/acts specified in the flowchart and/or block diagram.

The flowchart and block diagrams in the figures show architecture, functionality, and operation of possible implementations of systems, methods, and computer program products according to various implementations of the present disclosure. In this regard, each block in the flowchart or block diagram may represent a module, program segment, or portion of an instruction that includes one or more executable instructions for implementing the specified logical function. In some alternative implementations, the functions marked in the blocks may also occur in a different order than marked in the drawings. For example, two consecutive blocks may actually be performed substantially in parallel, which may sometimes be performed in the reverse order, depending on the functionality involved. It is also noted that each block in the block diagrams and/or flowchart, as well as combinations of blocks in the block diagrams and/or flowchart, may be implemented with a dedicated hardware-based system that performs the specified functions or actions, or may be implemented using a combination of dedicated hardware and computer instructions.

Various implementations of the present disclosure have been described above, and the foregoing description is illustrative, not exhaustive, and is not limited to the implementations as disclosed. Many modifications and variations will be apparent to those of ordinary skill in the art without departing from the scope and spirit of the illustrated implementations. The terminology used herein has been chosen to best explain the principles of the implementations, practical applications, or improvements to techniques in the marketplace, or to enable those skilled in the art to understand the various implementations disclosed herein.

## Claims

1. A method of interface interaction, comprising:
displaying a live streaming interface of a live streaming room, wherein the live streaming interface comprises an interaction region for presenting predetermined interaction content within the live streaming room; and
adjusting a display size of the interaction region in the live streaming interface based on an interaction state of the interaction region.

2. The method of claim 1, wherein adjusting the display size of the interactioninteraction region in the live streaming interface based on the interactioninteraction state of the interactionregion comprises:
adjusting, in response to receiving a first preset operation associated with the interaction region, the display size of the interaction region in the live streaming interface to increase from a first size to a second size.

3. The method of claim 2, wherein the live streaming interface comprises a first live streaming interface corresponding to a streamer within the live streaming room, and displaying the live streaming interface of the live streaming room comprises:
displaying, in response to a first access request for the live streaming room, the first live streaming interface of the live streaming room, the first live streaming interface having the interaction region of the first size.

4. The method of claim 2, wherein the first preset operation is configured to trigger a presentation of at least one piece of historical interaction content within the interaction region, and adjusting the display size of the interaction region in the live streaming interface based on the interaction state of the interaction region comprises:
increasing, in response to the live streaming room comprsing the at least one piece of historical interaction content not presented within the interaction region, the interaction region from the first size to the second size for presenting the at least one piece of historical interaction content.

5. The method of claim 4, wherein the first preset operation comprises: a sliding operation occurring within the interaction region in a predetermined direction.

6. The method of claim 1, wherein adjusting the display size of the interaction region in the live streaming interface based on the interaction state of the interaction region comprises:
reducing, in response to not receiving a second preset operation associated with the interaction region within a first period of time, the interaction region from a third size to a fourth size.

7. The method of claim 6, wherein the live streaming interface comprises a second live streaming interface corresponding to a viewer within the live streaming room, and displaying the live streaming interface of the live streaming room comprises:
displaying, in response to a second access request for the live streaming room, the second live streaming interface of the live streaming room, the second live streaming interface comprising the interaction region of the third size.

8. The method of claim 1, further comprising:
adjusting a first display style of the interaction region and/or a second display style of the predetermined interaction content within the interaction region to adjust a highlighting degree of the predetermined interaction content.

9. The method of claim 8, wherein adjusting the first display style of the interaction region comprises: adjusting a background transparency of the interaction region.

10. The method of claim 1, wherein adjusting the display size of the interaction region in the live streaming interface comprises:
adjusting a display height of the interaction region in the live streaming interface.

11. The method of claim 1, wherein the interaction region comprises a comment region of the live streaming room, and the predetermined interaction content comprises comment content within the live streaming room.

12. A method of interface interaction, comprising:
displaying a live streaming interface of a live streaming room, wherein the live streaming interface comprises a live streaming content region and an interaction region, the live streaming content region is configured to present live streaming content of the live streaming room, and the interaction region is configured to present predetermined interaction content within the live streaming room; and
adjusting, based on an interaction state of the interaction region, a degree to which the interaction region obsctruct the live streaming content region .

13. An apparatus of interface interaction, comprising:
a display module configured to display a live streaming interface of a live streaming room, wherein the live streaming interface comprises an interaction region for presenting predetermined interaction content within the live streaming room; and
an adjustment module configured to adjust a display size of the interaction region in the live streaming interface based on an interaction state of the interaction region.

14. An electronic device, comprising:
at least one processing unit; and
at least one memory coupled to the at least one processing unit and storing instructions for execution by the at least one processing unit, the instructions, when executed by the at least one processing unit, causing the electronic device to perform the method of any of claims 1 to 12.

15. A computer-readable storage medium having a computer program stored thereon, wherein the computer program is executable by a processor to implement the method of any of claims 1 to 12.
